# EUROPÄISCHE PATENTSCHRIFT

(11) **EP 2 710 190 B1**
(45) Veröffentlichungstag und Bekanntmachung des Hinweises auf die Patenterteilung: **27.04.2016**
(21) Anmeldenummer: 12722721.3
(22) Anmeldetag: 18.05.2012
(51) Int. Cl.: E01C 19/28

(54) **SYSTEM ZUR BEREITSTELLUNG VON EINEN VIBRATIONSZUSTAND REPRÄSENTIERENDEN INFORMATIONEN FÜR DEN BETRIEB VIBRATIONSEMITTIERENDER MASCHINEN, INSBESONDERE BAUMASCHINEN**
SYSTEM FOR MAKING AVAILABLE INFORMATION WHICH REPRESENTS A VIBRATION STATE FOR THE OPERATION OF VIBRATION-EMITTING MACHINES, IN PARTICULAR CONSTRUCTION MACHINES
SYSTÈME POUR OBTENIR DES INFORMATIONS REPRÉSENTANT UN ÉTAT VIBRATOIRE POUR LE FONCTIONNEMENT D'ENGINS ÉMETTANT DES VIBRATIONS, EN PARTICULIER D'ENGINS DE CHANTIER

(30) Priorität: 19.05.2011 DE 102011076131
(43) Veröffentlichungstag der Anmeldung: 26.03.2014
(60) Teilanmeldung: 14159082.8
(73) Patentinhaber: Hamm AG, 95643 Tirschenreuth (DE)
(72) Erfinder: OLSCHEWSKI, Thomas, 29410 Salzwedel (DE)
(74) Vertreter: RLTG
(86) Internationale Anmeldenummer: PCT/EP2012/059255
(87) Internationale Veröffentlichungsnummer: WO 2012/156507

(56) Entgegenhaltungen:
- EP-A1- 1 985 760
- WO-A2-2008/033969
- JP-A- 2000 204 552
- KR-A- 20090 129 736

## Beschreibung

Die vorliegende Erfindung betrifft ein System zur Bereitstellung von einen Vibrationszustand repräsentierender Information für den Betrieb vibrationsemittierender Maschinen, insbesondere Baumaschinen, umfassend wenigstens eine Messstation mit wenigstens einem Sensor zur Erfassung wenigstens einer im Zusammenhang mit dem Vibrationszustand stehenden Größe und mit einer Funk-Sendeeinheit zur Abgabe eines mit der Größe in Zusammenhang stehenden Funk-Ausgangssignals sowie wenigstens eine Empfangsstation zur Aufnahme des Funk-Ausgangssignals der wenigstens einen Messstation.

Ein derartiges System ist aus der EP 1 985 760 A1 bekannt. In einem von Verdichtungsmaschinen zu bearbeitenden Bereich sind beispielsweise in Zuordnung zu verschiedenen Bauwerken an relevanten Messorten Sensoren aufgestellt, welche den am jeweiligen Messort vorhandenen Schwingungszustand erfassen und die Schwingungsmesswerte über Funk direkt an eine Datenerfassungs- und Verarbeitungseinheit übertragen. In dieser Datenerfassungs- und Verarbeitungseinheit, die beispielsweise unmittelbar an einer Verdichtungsmaschine untergebracht sein kann, werden die Schwingungsmesswerte verarbeitet, um beispielsweise Information dahingehend bereitzustellen, dass der Schwingungsmesswert kleiner als ein vorgegebener Grenzwert ist, gleich dem Grenzwert ist oder größer als der Grenzwert ist. Es werden dann automatisiert in einem Regelkreis Verdichtungsparameter einer Verdichtungsmaschine verändert, um das Überschreiten des Grenzwertes zu vermeiden bzw. dann, wenn dieser bereits überschritten wurde, die Rückkehr in den zulässigen Arbeitsbereich zu gewährleisten. Durch Erfassung der Position einer Verdichtungsmaschine und auch der Position der verschiedenen Schwingungssensoren und dem Vergleich dieser Positionen, also unter Berücksichtigung des Abstands einer Verdichtungsmaschine zu den Schwingungssensoren, kann bei diesem bekannten System entschieden werden, welche Schwingungsmesswerte für eine Verdichtungsmaschine relevant sind und somit für deren Betrieb zu berücksichtigen sind.

Es ist die Aufgabe der vorliegenden Erfindung, ein System zur Bereitstellung von einen Vibrationszustand repräsentierender Information für den Betrieb vibrationsemittierender Maschinen, insbesondere Baumaschinen, sowie ein Verfahren zum Betreiben einer derartigen Maschine bereitzustellen, mit welchen in einfacher Art und Weise bei erhöhter Betriebssicherheit die Entstehung vibrationsinduzierter Beschädigungen an Bauwerken vermieden werden kann.

Erfindungsgemäß wird diese Aufgabe gelöst durch ein System zur Bereitstellung von einen Vibrationszustand repräsentierender Information für den Betrieb vibrationsemittierender Maschinen, insbesondere Baumaschinen, umfassend wenigstens eine Messstation mit wenigstens einem Sensor zur Erfassung wenigstens einer im Zusammenhang mit dem Vibrationszustand stehenden Größe und mit einer Funk-Sendeeinheit zur Abgabe eines mit der Größe in Zusammenhang stehenden Funk-Ausgangssignals sowie wenigstens eine Empfangsstation zur Aufnahme des Funk-Ausgangssignals der wenigstens einen Messstation.

Gemäß einem ersten Aspekt der vorliegenden Erfindung ist dabei weiter vorgesehen, dass die wenigstens eine Messstation eine ein Sensorsignal von dem wenigstens einen Sensor aufnehmende Auswerteeinheit zur Bereitstellung eines den Vibrationszustand repräsentierenden Auswertesignals auf der Grundlage des Sensorsignals umfasst, wobei die Funk-Sendeeinheit das Funk-Ausgangssignal auf der Grundlage des Auswertesignals erzeugt.

Während bei dem aus dem Stand der Technik bekannten System die von den verschiedenen Sensoren generierten Schwingungsmesswerte bzw. Schwingungssignale zu einer Datenverarbeitungseinheit per Funk zu übertragen sind, findet bei dem erfindungsgemäßen System die Datenverarbeitung bzw. zumindest ein Teil der Datenverarbeitung in der bzw. den Messstationen selbst satt. Übertragen wird somit ein Ergebnis oder ein Teilergebnis der Datenverarbeitung mit der Folge, dass die Menge der zu übertragenden Daten bzw. Informationen deutlich verringert ist. Dies gestattet den Einsatz von Funkübertragungsstrecken, bei welchen niedrigere Funkfrequenzen zum Einsatz kommen. Die Folge davon ist ein höherer Durchdringungsgrad beispielsweise bei Mauerwerk und eine deutlich erhöhte Reichweite, so dass die Kommunikationssicherheit und damit auch die Sicherheit bei der Berücksichtigung von vibrationsrelevanten Informationen im Betrieb einer vibrationsemittierenden Maschine deutlich erhöht werden kann. Ein weiterer Vorteil ist, dass durch die geringere zu übertragende Datenmenge kürzere Übertragungszeiten genutzt werden können und dadurch der zur Übertragung erforderliche Energieaufwand verringert werden kann.

Bei dem erfindungsgemäßen System kann vorzugsweise weiter vorgesehen sein, dass die wenigstens eine Empfangsstation eine Funk-Empfangseinheit zur Aufnahme des Funk-Ausgangssignals von wenigstens einer Messstation und eine Signalverarbeitungseinheit zur Erzeugung von Vibrationsanzeigeinformation für eine optische oder/und akustische Vibrationszustandswiedergabeeinheit oder/und zur Erzeugung von Vibrationszustandsreaktionsansteuerinformation zur Ansteuerung einer vibrationsemittierenden Maschine umfasst.

In einer derartigen Empfangsstation wird also dafür gesorgt, dass die in einer oder mehreren Messstationen bereits verarbeiteten Signale in Form eines Signal- bzw. Daten-Verarbeitungsergebnisses berücksichtigt werden können, beispielsweise um einer Bedienperson durch entsprechende optische oder/und aktustische Wiedergabe anzuzeigen, ob an einem oder ggf. mehreren Messorten ein kritischer Schwingungszustand vorliegt, oder nicht. Alternativ oder zusätzlich kann die in einer oder mehreren Messstationen bereits verarbeitete Information dazu genutzt werden, eine vibrationsemittierende Maschine so anzusteuern bzw. deren Betrieb so zu beeinflussen, dass ein möglicherweise bereits vorliegender kritischer Vibrationszustand wieder verlassen wird oder, sofern in einem zulässigen Bereich gearbeitet wird, die Schwingungsintensität erhöht wird, so dass die erforderliche Bearbeitungszeit verringert werden kann, ohne jedoch in einen kritischen Zustand zu gelangen.

Bei dem erfindungsgemäßen System kann wenigstens ein Sensor als Beschleunigungssensor ausgebildet sein. Alternativ oder zusätzlich kann wenigstens ein Sensor als Geschwindigkeitssensor ausgebildet sein. Mit derartigen Sensoren wird es möglich, den Vibrationszustand an einem Messort zuverlässig repräsentierende Signale für die nachfolgende Informationsverarbeitung in der Auswerteeinheit wenigstens einer Messstation zur Verfügung zu stellen.

Bei einer besonders vorteilhaften Weiterbildung des erfindungsgemäßen Systems wird vorgeschlagen, dass die Auswerteeinheit dazu ausgebildet ist, das Auswertesignal auf der Grundlage folgender Information zu erzeugen:
- einer einen Messort oder/und eine Messzone um den Messort repräsentierenden Ortsinformation, oder/und
- einer Vibrationsschwellenwertinformation, oder/und
- einer die Art der Vibration repräsentierenden Vibrationsartinformation, vorzugsweise in Verbindung mit einer Vibrationsartschwellenwertinformation, oder/und
- einer Messzeitinformation, vorzugsweise in Verbindung mit einer Messzeitschwellenwertinformation.

In die in wenigstens einer Messstation durchgeführte Datenverarbeitung können somit verschiedene relevante Größen einfließen, wiederum mit der Folge, dass an der Empfangsstation bereits unter Berücksichtigung derartiger auch für den Betrieb einer vibrationsemittierender Maschine relevanter Informationen für den Betrieb einer vibrationsemittierenden Maschine relevante Daten mitgeteilt bzw. genutzt werden können.

Dazu ist es besonders vorteilhaft, wenn die Auswerteeinheit wenigstens eine Schnittstelle zur Eingabe wenigstens einer in Verbindung mit dem Sensorsignal der Erzeugung des Auswertesignals zu Grunde zu legenden Information oder/und von Konfigurationsformation zugeordnet ist. Über diese wenigstens eine Schnittstelle können in der Auswerteeinheit diejenigen Informationen hinterlegt werden, welche bei der Datenverarbeitung zu berücksichtigen sind. Es sei darauf hingewiesen, dass die Schnittstelle zur direkten Verbindung der Auswerteeinheit bzw. einer Messstation mit einem Gerät, beispielsweise über Kabelverbindung, ausgebildet sein kann, um diese Informationen eingeben zu können. Selbstverständlich ist es auch möglich, diese Schnittstelle als Funkverbindungsschnittstelle auszugestalten, um diese relevanten Informationen zu einer Messstation über Funk zu übertragen, beispielsweise auch ausgehend von der Empfangsstation.

Bei einer besonders vorteilhaften Weiterbildung des erfindungsgemäßen Systems kann vorgesehen sein, dass der Auswerteeinheit eine Speichereinheit zugeordnet ist zur Speicherung des Sensorsignals von wenigstens einem Sensor oder/und des Auswertesignals, vorzugsweise zur späteren Erzeugung des Funk-Ausgangssignals. Durch das Aufzeichnen des Sensorsignals wird es möglich, zu einem späteren Zeitpunkt den Vibrationszustand am jeweiligen Messort nachzuvollziehen, wozu vorteilhafterweise das Sensorsignal mit entsprechender Zeitinformation abgespeichert wird. Weiter besteht auf diese Art und Weise die Möglichkeit, wenn beispielsweise aufgrund nicht vorhersehbarer Umstände vorübergehend die Datenübertragungsverbindung zwischen einer Messstation und der Empfangsstation unterbrochen ist, dann, wenn wieder eine Kommunikation zwischen diesen Stationen möglich ist, auf das abgespeicherte Sensorsignal zuzugreifen, ein Auswertesignal zu genieren und dieses dann zur Empfangsstation zu übertragen. Hierzu kann es weiter vorteilhaft sein, dass alternativ oder zusätzlich zur Abspeicherung des Sensorsignals von wenigstens einem Sensor auch das daraus generierte Auswertesignal abgespeichert wird, um dann, wenn eine Funkkommunikation wieder möglich ist, dieses Auswertesignal für in der Vergangenheit liegende Zeitbereiche übertragen zu können.

Um in der Empfangsstation nachvollziehen zu können, wo bzw. in welchem Bereich der Vibrationszustand möglicherweise kritisch oder nicht kritisch ist, wird weiter vorgeschlagen, dass das von wenigstens einer Messstation ausgegebene Funk-Ausgangssignal die Messstation identifizierende Identifikationsinformation enthält. Dabei kann beispielsweise vorgesehen sein, dass die Identifikationsinformation Information über den Messort oder/und eine Messzone um den Messort der Messstation enthält.

Gemäß einem weiteren Aspekt kann bei dem erfindungsgemäßen System vorgesehen sein, dass eine Mehrzahl von Messstationen oder/und Empfangsstationen vorgesehen ist, wobei wenigstens eine Messstation oder/und Empfangsstation eine Funk-Empfangseinheit zur Aufnahme des Funk-Ausgangssignals von wenigstens einer anderen der Messstationen oder/und Empfangsstationen aufweist, wobei die Funk-Sendeeinheit der wenigstens einen Messstation oder/und eine Funk-Sendeeinheit wenigstens einer Empfangsstation dazu ausgebildet ist, auf der Grundlage eines von einer anderen Messstation empfangenen Funk-Ausgangssignals ein Funk-Ausgangssignal zu erzeugen.

Wie bereits vorangehend angesprochen, besteht bei dem erfindungsgemäßen System bereits aufgrund der Tatsache, dass die zu übertragende Daten- bzw. Informationsmenge deutlich reduziert ist, die Möglichkeit, eine Funkverbindung mit erhöhter Zuverlässigkeit aufgrund höherer Reichweite und aufgrund höheren Durchdringungsgrades bereitzustellen. Wenn dann weiterhin vorgesehen ist, dass verschiedene Messstationen oder/und Empfangsstationen untereinander kommunizieren können und die von anderen Stationen abgegebenen Funk-Ausgangssignale weiterleiten können, wird die Übertragungssicherheit zwischen den Messstationen und der wenigstens einen Empfangsstation weiter erhöht. Hier können insbesondere redundante Übertragungswege bereitgestellt werden, so dass dann, wenn ein Übertragungsweg beispielsweise aufgrund der Tatsache, dass eine Baumaschine sich vor eine Messstation bewegt und diese zur direkten Funkkommunikation mit der Empfangsstation schirmt, andere Übertragungswege über eine oder mehrere andere Messstationen genutzt werden können, um das Funk-Ausgangssignal einer vorübergehend oder möglicherweise aufgrund ihrer Positionierung auch permanent abgeschirmten Messstation zur Empfangsstation senden zu können.

Dabei ist vorzugsweise vorgesehen, dass das von der Funk-Sendeeinheit der wenigstens einen Messstation oder/und Empfangsstation erzeugte Funk-Ausgangssignal dem von einer anderen Messstation oder Empfangsstation empfangenen Funk-Ausgangssignal entspricht. Dies bedeutet, dass die verschiedenen Stationen dazu ausgebildet sind, die von anderen Stationen aufgenommenen Funk-Ausgangssignale grundsätzlich ohne Veränderung ihres Inhalts weiterzuleiten, so dass in der Empfangsstation bei der weiteren Verarbeitung, beispielsweise zur Anzeige oder Wiedergabe des Signalinhalts, der Übertragungspfad unberücksichtigt bleiben kann.

Bei einer besonders vorteilhaften Ausgestaltung kann vorgesehen sein, dass eine Mehrzahl von Messstationen oder/und Empfangsstationen ein vermaschtes Netzwerk zur Informationsübertragung zu wenigstens einer Empfangsstation bildet. Hier arbeiten also die verschiedenen Stationen nach Art eines so genannten Ad-hoc-Netzwerkes zusammen, in welchem auf Grundlage entsprechender Routingprotokolle die im Netzwerk möglichen bzw. einrichtbaren Übertragungswege idenfiziert bzw. ausgewählt werden.

Besonders vorteilhaft kann das erfindungsgemäße System dann arbeiten, wenn alternativ zu oder zusätzlich zu verschiedenen Messstationen auch wenigstens eine beispielsweise an einem Verdichter vorgesehene Empfangsstation zum Bereitstellen einer derartigen Routingfunktionalität genutzt werden kann. Dies erhöht die mögliche Anzahl der Knoten eines Netzwerks, was zu einer entsprechenden Erhöhung der Übertragungssicherheit beitragen kann, insbesondere dann, wenn eine derartige Empfangsstation mit einem Verdichter bewegbar ist und somit nicht davon auszugehen ist, dass diese permanent durch ein Bauwerk oder ein anderes Gerät verdeckt und somit gegen Funkübertragung abgeschirmt ist.

Gemäß einem weiteren Aspekt der vorliegenden Erfindung wird die eingangs genannte Aufgabe gelöst durch ein Verfahren zum Betreiben einer Maschine, insbesondere Baumaschine, auf der Grundlage von einen Vibrationszustand repräsentierender Information, unter Verwendung eines erfindungsgemäßen Systems, wobei das Verfahren die Maßnahmen umfasst:
- in Zuordnung zu wenigstens einer Messstation, Definieren einer Messzone,
- Erzeugen von einen Vibrationszustand in der Messzone repräsentierender Information vermittels der wenigstens einen Messstation,
- Berücksichtigen der den Vibrationszustand repräsentierenden Information für den Betrieb der Maschine nur dann, wenn diese Maschine sich in der Messzone befindet oder sich in die Messzone bewegt.

Mit dieser Vorgehensweise wird es möglich, die in einem mit Vibrationen beaufschlagten Areal vorhandenen topologischen Eigenschaften bzw. Untergrundbeschaffenheiten bei der Definition jeweiliger Messzonen zu berücksichtigen. Somit wird eine Entscheidung dahingehend möglich, ob eine vibrationsemittierende Maschine für eine jeweilige Messzone überhaupt relevant ist, oder ob sie beispielsweise aufgrund der Tatsache, dass sie sich außerhalb der Messzone befindet bzw. auch nicht in Richtung auf die Messzone zu bzw, in diese hinein bewegt, für in einer jeweiligen Messzone vorhandene Bauwerke grundsätzlich unkritisch ist. Ist dies der Fall, braucht die in einer derartigen Zone bereitgestellte Information tatsächlich für den weiteren Betrieb einer Maschine nicht berücksichtigt zu werden. Da durch die Definition derartiger Messzonen die Vibrationsübertragungseigenschaften mitberücksichtigt werden können, wird es insbesondere möglich, wenn bei vergleichsweise großem Abstand zwischen einer Messstation und einer vibrationsemittierenden Maschine, dann, wenn der dazwischen liegende Untergrund Vibrationen sehr gut überträgt, dies entsprechend zu berücksichtigen und ggf. zur Beurteilung zu gelangen, dass der momentane Betrieb einer Maschine trotz vergleichsweise großem Abstand kritisch sein kann.

Dabei kann die Messzone definiert werden auf Grundlage der:
- Beschaffenheit des Untergrunds im Bereich der Messzone, oder/und
- Art des Messortes, oder/und
- Art der Vibrationen.

Es ist also erfindungsgemäß möglich bzw. vorgesehen, verschiedene das Vibrationsverhalten beeinflussende Aspekte in die Definition der Messzone einfließen zu lassen. So kann durch die Berücksichtigung der Beschaffenheit des Untergrunds dessen Schwingungsübertragungsvermögen bzw. Schwingungsdämpfungsvermögen einfließen. Schwingungen gut weiterleitender Untergrund führt im Allgemeinen zu einer weiter ausgedehnten Messzone, da auch die durch weiter vom Messort entfernt positionierten Maschinen generierten Vibrationen dann zu einem kritischen Schwingungszustand am Messort führen können. Selbstverständlich kann dabei auch berücksichtigt werden, dass der Untergrund in verschiedenen Richtungen ausgehend vom Messort unterschiedliche Beschaffenheiten haben kann und mithin die Messzone in verschiedenen Richtungen unterschiedlich ausgedehnt sein kann. Weiter kann durch die Berücksichtigung der Art des Messortes, beispielsweise ob dies ein Bodenareal, ein Gebäude, eine Brücke oder dergleichen ist, die Empfindlichkeit des Messortes selbst einfließen, so dass beispielsweise bei empfindlicheren Messorten eine weiter ausgedehnte Messzone vorgesehen werden kann, als bei weniger empfindlichen Messorten. Schließlich kann durch die Berücksichtigung der Art der Vibrationen noch mit einfließen, ob bzw. in welchem Ausmaß diese durch eine Baumaschine, ggf. auch eine Sprengung, generierten Vibrationen für einen Messort zu kritischen Situationen führen können. Hier kann insbesondere eine Verknüpfung mit der Art des Messortes vorgesehen sein, da verschiedene Arten von Messorten bei verschiedenen Arten von Vibrationen bzw. Schwingungsanregungen grundsätzlich unterschiedliche Empfindlichkeiten aufweisen können.

Die vorliegende Erfindung wird nachfolgend mit Bezug auf die beiliegenden Figuren detailliert beschrieben. Es zeigt:
- Fig. 1: in prinzipieller Darstellung den Aufbau eines System zur Bereitstellung von einen Vibrationszustand repräsentierender Information;
- Fig. 2: eine weitere Prinzipdarstellung, welche die Wechselwirkung zwischen verschiedenen Messstationen und verschiedenen Empfangsstationen veranschaulicht;
- Fig. 3: in prinzipartiger Darstellung den Betrieb mehrerer vibrationsemittierender Baumaschinen im Bereich sich einander überlappender Messzonen.

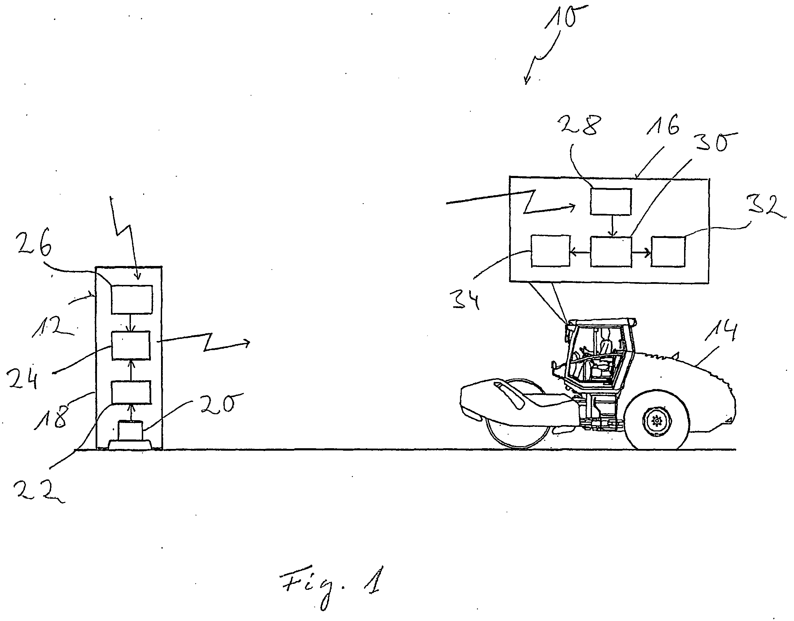

In Fig. 1 ist ein System zur Bereitstellung von einen Vibrationszustand repräsentierender Information allgemein mit 10 bezeichnet. Das in Fig. 1 dargestellte System umfasst eine Messstation 12 und eine beispielsweise an einer Baumaschine, hier einem Verdichter 14, insbesondere Bodenverdichter, angeordnete Empfangsstation 16. Es sei bereits hier darauf hingewiesen, dass das System 10 selbstverständlich und im Normalfall mehr als eine Messstation 12 umfassen kann und gleichermaßen mehr als eine Empfangsstation 16 umfassen kann, beispielsweise wenn mehrere Verdichter 14 an einer Baustelle im Einsatz sind.

Die vorteilhafterweise tragbar ausgeführte Messstation 12 umfasst in einem Gehäuse 18 wenigstens einen Sensor 20, der als Beschleunigungssensor oder als Geschwindigkeitssensor ausgebildet sein kann. Selbstverständlich kann die Messstation 12 auch mehrere Sensoren 20 umfassen, um beispielsweise die Betriebssicherheit dadurch zu erhöhen, dass bei Ausfall eines Sensors auf das Signal eines anderen zurückgegriffen wird oder die Signale verschiedener Sensoren auf Abweichungen verglichen werden und bei Auftreten übermäßig großer Abweichungen entsprechende Warnungen erzeugt werden. Weiter ist es möglich, den oder wenigstens einen Sensor 20 außerhalb des Gehäuses 18 vorzusehen, um ihn beispielsweise auf einem zu überwachenden Objekt oder Untergrund absetzen zu können. In diesem Falle kann eine Datenübertragungsverbindung zwischen dem oder den Sensoren 20 und weiteren in der Messstation vorhandenen Systembereichen beispielsweise durch eine Kabelverbindung erreicht werden.

Das von dem Sensor 20 generierte Sensorsignal wird zu einer Auswerteeinheit 22 geleitet, in welcher in nachfolgend beschriebener Art und Weise das Sensorsignal ausgewertet wird, um für den Betrieb des Verdichters 14 relevante Information zu generieren. Das in der Auswerteeinheit 22 auf Gründlage des Sensorsignals generierte Auswertesignal wird zu einer Funk-Sendeeinheit 24 übertragen, welche dazu ausgebildet ist, das Auswertesignal in ein entsprechendes Funk-Ausgangssignal umzuwandeln und dieses abzugeben.

Ferner umfasst die Messstation 12 vorteilhafterweise eine Funk-Empfangseinheit 26. Über die Funk-Empfangseinheit 26 können Funk-Ausgangssignale von anderen Messstationen 12 aufgenommen werden, zur Funk-Sendeeinheit 24 weitergeleitet und von dieser wieder abgegeben werden.

In der Empfangsstation 16 ist eine Funk-Empfangseinheit 28 vorgesehen, welche das von einer oder mehreren Messstationen 12 abgegebene Funk-Ausgangssignal aufnimmt. Dieses Signal wird dann zu einer Signalverarbeitungseinheit 30 weitergeleitet. In der Signalverarbeitungseinheit 30 kann die in dem empfangenen Funk-Ausgangssignal enthaltene Information derart umgewandelt bzw. genutzt werden, dass in einer Informationswiedergabeeinheit 32, beispielsweise einer optischen Wiedergabeeinheit 32, die einer Bedienperson mitzuteilende Information angezeigt wird. Selbstverständlich kann diese Wiedergabe alternativ oder zusätzlich auch in akustischer Weise bzw. in jedweder durch eine Bedienperson wahrnehmbaren Weise erfolgen. Beispielsweise könnte auch ein durch die Bedienperson wahrnehmbarer und vorzugsweise entsprechend der mitzuteilenden Information variierbarer Vibrationszustand genutzt werden.

Weiter kann die Funk-Empfangseinheit 16 eine Ansteuereinheit 34 umfassen bzw. eine in einer vibrationsemittierenden Maschine vorhandene Ansteuereinheit nutzen, um die den Vibrationszustand repräsentierende Information unmittelbar in die Ansteuerung der Maschine einfließen zu lassen, beispielsweise durch Veränderung verschiedener Vibrationsparameter, wie z. B. Vibrätionsfrequenz oder/und Vibrationsamplitude, insbesondere dann, wenn ein kritischer Vibrationszustand erfasst wurde.

Um selbst mit einer oder mehreren Messstationen 12 oder anderen Systembereichen in Verbindung treten zu können, kann auch die Empfangsstation 16 eine Funk-Sendeeinheit umfassen.

Zum Betrieb des in Fig. 1 dargestellten Systems wird die bzw. jede Messstation 12 an einem dafür vorgesehenen Messort positioniert. Grundsätzlich wird dabei so vorgegangen, dass die bzw. jede Messstation 12 derart bzw. an einer derartigen Stelle positioniert wird, dass der zu überwachende Vibrationszustand, also die auf ein Bauwerk einwirkenden Erschütterungen, so erfasst werden kann, dass ein Rückschlüss auf die Erschütterungsbelastung des Bauwerks möglich ist. Dazu kann die Messstation 12 entweder auf dem hinsichtlich seines Vibrationszustands zu überwachenden Untergrund abgestellt werden oder sie kann beispielsweise am Mauerwerk eines hinsichtlich des Vibrationszustands zu überwachenden Bauwerks, wie z. B. Gebäude oder Brücke, festgelegt werden. Für den Vibrationszustandsüberwachungsbetrieb werden in der Auswerteeinheit 22 verschiedene für die nachfolgende Auswertung des Sensorsignals bzw. auch das zu erzeugende Funk-Ausgangssignal relevante Informationen hinterlegt. Diese umfassen beispielsweise den Messort, welcher in Form der für eine jeweilige Positionierung vorhandenen GPS-Daten definiert sein kann. Ferner kann der Messort durch die Identifizierung des zu überwachenden Objekts beispielsweise als Wohngebäude, Industriegebäude, Brücke, Turm oder dergleichen spezifiziert werden. In Zuordnung zu einem jeweiligen Messort können dann messortbezogene Schwellenwerte hinterlegt werden bzw. hinterlegt sein, so dass in der Auswerteeinheit 22 beispielsweise eine Vielzahl an verschiedenen Messorten bzw. Bauwerksarten und diesen zugeordnet beispielsweise jeweils verschiedene Schwellenwerte hinterlegt sein können, so dass für einen jeweiligen Überwachungsvorgang lediglich identifiziert wird, welcher Objekttyp zu überwachen ist, und die Auswerteeinheit 22 dann selbsttätig den zugeordneten Schwellenwert verwendet. Alternativ kann für jeden Überwachungsvorgang beispielsweise der Typ des zu überwachenden Objekts und der zugeordnete Schwellenwert in der Auswerteeinheit 22 hinterlegt werden.

Weiter kann zeitbezogene Information hinterlegt werden, so dass beispielsweise für die Nachtzeit auch in Zuordnung zu verschiedenen zu überwachenden Objekten andere Schwellenwerte gesetzt werden bzw. bei der Auswertung berücksichtigt werden können, als tagsüber. Schließlich können in der Auswerteeinheit 22 auch Informationen darüber hinterlegt werden, welche im Zusammenhang mit der Erzeugung der zu überwachenden Vibrationen stehen. Diese verfahrensbezogene Information kann also beispielsweise wiedergeben, ob Vibrationen durch einen oder mehrere Bodenverdichter 14 generiert werden, oder ob beispielsweise ein Rammgerät eingesetzt wird oder eine Sprengung erfolgen soll. Auch hierfür können dann jeweilige Schwellenwerte vorgegeben werden bzw. in Abhängigkeit von der Art und Weise der Vibrationserzeugung unterschiedliche Auswerteverfahren genutzt werden.

Um diese Informationen in der Messstation 12 bzw. der Auswerteeinheit 22 zu hinterlegen, kann die Messstation 12 eine Schnittstelle umfassen, an welcher beispielsweise über ein Übertragungskabel entsprechende Informationen eingegeben werden können. Auch die Funk-Empfangseinheit 26 kann als derartige Schnittstelle genutzt werden, um diese Informationen über Funk z.B. von einer Empfangseinheit 16 aus zur Messstation 12 und somit zur Auswerteeinheit 22 übertragen zu können. Grundsätzlich könnte jedoch die Messstation 12 auch selbst mit einer zur Eingabe von Informationen nutzbaren Bedieneinheit, wie z.B. Tastur, Touchpad oder dergleichen ausgestattet sein.

Ferner kann die Messstation 12 in Zuordnung zur Auswerteeinheit 22 eine Speichereinheit umfassen, um das Sensorsignal des Sensors 20 oder/und das von der Auswerteeinheit 22 generierte Auswertesignal mit jeweils zugeordneter Zeitinformation abzuspeichern. Dies ermöglicht beispielsweise die Auswertung bzw. Übertragung zu einem späteren Zeitpunkt, wenn die Funkkommunikation zwischen einer Messstation 12 und der Empfangsstation 16 vorübergehend gestört ist. Auch kann erforderlichenfalls nachfolgend eine detailliertere Analyse der Sensorsignale vorgenommen werden. Weiterhin umfasst die Messstation 12 vorzugsweise eine Energiequelle, beispielsweise in Form einer oder mehrerer Batterien oder Akkumulatoren, so dass sichergestellt ist, dass jede Messstation 12 auch autark ohne externe Energieversorgung arbeiten kann.

Das im Sensor 20 generierte Sensorsignal wird vorzugsweise als Geschwindigkeitssignal bereitgestellt bzw. in ein Geschwindigkeitssignal umgewandelt. Dieses Signal kann beispielsweise in der Auswerteeinheit 22 dann einer Frequenzbandbegrenzung unterzogen werden, die beispielsweise wiederum abhängig sein kann von der Art und Weise, in welcher Vibrationen generiert werden. Für einen Betrieb mit einem oder mehreren Bodenverdichtern 14 kann beispielsweise ein Frequenzbereich von 1-80 Hz ausgewählt werden, während beispielsweise für Sprengungen auch höhere Frequenzen bis zu über 300 Hz berücksichtigt werden können. Das in dieser Art und Weise bandbegrenzte Signal kann dann beispielsweise hinsichtlich der Geschwindigkeitsspitzenwerte oder hinsichtlich Geschwindigkeitseffektivwerten analysiert und mit jeweiligen Grenzwerten verglichen werden. Die in der Auswerteeinheit 22 dann ggf. unter Berücksichtigung der verschiedenen vorangehend bereits angegebenen Informationen bereitgestellte Ausgangsinformation kann beispielsweise anzeigen, ob ein jeweiliger Grenzwert überschritten ist oder nicht, oder wie groß die tatsächlich vorhandenen Vibrationen im Verhältnis zu dem vorgegebenen Schwellenwert sind, beispielsweise angegeben in Prozentzahlen. Diese Information wird dann in Form des Auswertesignals zur Funk-Sendeeinheit 24 übertragen und von dieser zur Empfangsstation 16 gesandt. Diese wiederum kann so ausgebildet sein, dass sie nur dann, wenn der Schwellenwert überschritten ist, eine entsprechende Anzeige in der Anzeigeeinheit 32 generiert bzw. einen entsprechenden Ansteuerungseingriff für den Verdichter 14 generiert. Bei der Wiedergabe von Prozentzahlen kann dies der Bedienperson beispielsweise in Form eines ggf. auch farbig dargestellten Balkendiagramms angezeigt werden.

Arbeitet in dem System die Empfangsstation 16 mit mehreren Messstationen 12 zusammen, so kann die Empfangsstation 16 bzw. die Signalverarbeitungseinheit 30 derselben dazu ausgebildet sein, von den von unterschiedlichen Messstationen empfangenen und die verschiedenen Vibrationszustände repräsentierenden Informationen nur diejenigen anzuzeigen oder in sonstiger Weise wiederzugeben, welche einen kritischen Vibrationszustand oder die Tendenz in Richtung zu einem kritischen Vibrationszustand indizieren. Auf diese Art und Weise kann die für eine Bedienperson zur Verfügung gestellte Information auf ein Ausmaß reduziert werden, welches einerseits das Ergreifen geeigneter Gegenmaßnahmen zulässt, andererseits aber eine Überfrachtung mit an sich nicht weiter relevanten Informationen vermeidet.

Sowohl in der Messstation 12 als auch in der Empfangsstation 16 können die verschiedenen darin vorgesehenen Einheiten als separate Baugruppen bereitgestellt sein, die beispielsweise durch Steck- oder Kabelverbindung miteinander zum Signalaustausch zu verbinden sind. Grundsätzlich ist jedoch auch eine integrierte Ausgestaltung zumindest einiger der jeweiligen Einheiten in einem Schaltkreis möglich.

Durch die vorangehend beschriebene Ausgestaltung des Systems 10 bzw. dessen Betriebsweise wird es einerseits möglich, die zwischen einer Messstation 12 und einer Empfangsstation 16 zu übertragende Information zu reduzieren auf eine für den Betrieb des Verdichters 14 minimale Informationsdichte. Dies gestattet im Vergleich zur Übertragung eines den vollständigen Frequenzumfang enthaltenden Sensorsignals des Sensors 20 den Einsatz deutlich niedriger Frequenzen, beispielsweise im Bereich zwischen 800 und 900 MHz. Mit derartiger Funkfrequenz wird eine wesentlich höhere Reichweite im Vergleich zu höherfrequenten Signalen erreicht. Auch ist der Durchdringungsgrad bei Mauerwerk deutlich verbessert, so dass allgemein eine erhöhte Sicherheit in der Funkkommunikation zwischen der Messstation 12 und der Empfangsstation 16 gewährleistet werden kann. Weiterhin wird der Verarbeitungsaufwand in der Empfangsstation 16 auf dass dort erforderliche Minimum reduziert, was insbesondere dann, wenn eine Mehrzahl von Messstationen 12 im Einsatz ist, von Vorteil ist. Insbesondere wird es damit möglich, auch in der Empfangsstation 16 die empfangenen Signale bzw. die darin repräsentierten Informationen, ggf. in Zuordnung zu verschiedenen Messstationen abzuspeichern, um erforderlichenfalls zu einem späteren Zeitpunkt eine genauere Analyse vornehmen zu können. Auch hier erfolgt die Abspeicherung der von den Messstationen 12 empfangenen Signale vorteilhafterweise mit Zuordnung entsprechender Zeitinformation, um somit nicht nur den Messort, sondern auch die Messzeit identifizieren zu können, was wiederum die Vergleichbarkeit mit entsprechend zeitkodierter Information über den Betrieb einer vibrationsemittierenden Maschine gewährleistet.

Eine weitere Erhöhung der Betriebssicherheit kann bei dem erfindungsgemäßen System dadurch gewährleistet werden, dass die von verschiedenen Messstationen 12 übertragenen Informationen in einer Empfangsstation 16 nicht notwendigerweise unmittelbar zu einem Ansteuereingriff in den Betrieb einer vibrationsemittierenden Maschine führen, sondern der Bedienperson die Entscheidung überlassen werden kann, wie auf verschiedene Vibrationszustände reagiert wird. Aufgrund der Tatsache, dass die Messstationen 12 über ein größeres Areal verteilt sein können und nicht ausgeschlossen werden kann, dass beabsichtigte oder unbeabsichtigte Manipulationen an Messstationen 12 zu einer Verfälschung des eigentlich vorliegenden Vibrationszustands führen können, kann eine Bedienperson dann, wenn eine ihr unplausibel erscheinende Information wiedergegeben wird, entscheiden, ob der Betrieb in unveränderter Weise fortgesetzt wird oder ggf. Änderungen erforderlich sind. Grundsätzlich könnte auch in einem automatisiert arbeitenden System eine entsprechende Plausibilitätsüberprüfung stattfinden. Dies könnte dahingehend erfolgen, dass dann, wenn von verschiedenen Messstationen mehrere einen an sich unkritischen Vibrationszustand induzieren, während eine einzige Messstation einen kritischen Zustand anzeigt, überprüft wird, ob grundsätzlich der Zustand auftreten kann, dass nur diese eine Messstation einen kritischen Vibrationszustand indiziert, und dass dann, wenn dies zumindest theoretisch nicht der Fall sein kann oder unwahrscheinlich ist, die Information von dieser Messstation ignoriert wird oder/und eine entsprechende Warnung generiert wird, um einer Bedienperson anzuzeigen, dass von einer Messstation unplausible Information übertragen wurde.

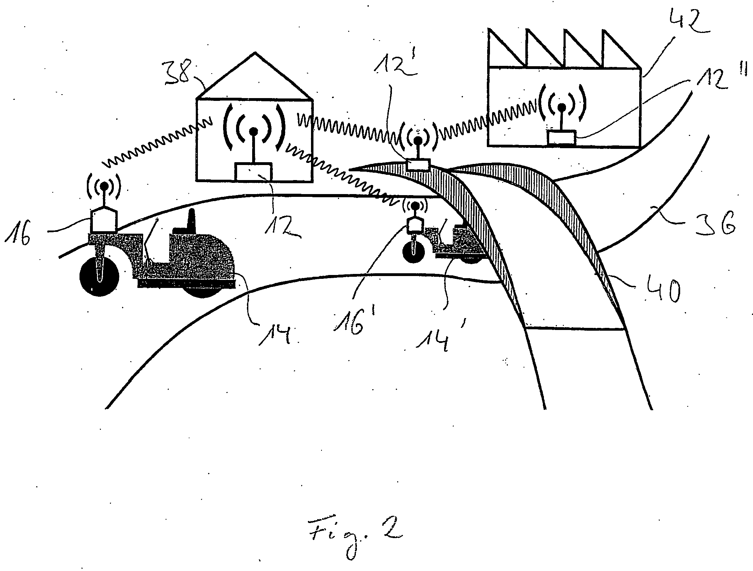

Der Betrieb eines Systems 10 mit dem vorangehend beschriebenen grundsätzlichen Aufbau mit mehreren Messstationen 12 und mehreren Empfangsstationen 16 wird nachfolgend mit Bezug auf die Fig. 2 detaillierter erläutert.

In Fig. 2 ist eine Baustelle dargestellt, bei welcher der Untergrund für eine zu errichtende Straße 36 durch zwei Verdichter 14, 14' verdichtet werden soll. An jedem dieser Verdichter 14, 14' ist eine Empfangseinheit 16 bzw. 16' vorgesehen, die den vorangehend beschriebenen Aufbau aufweisen kann. In Zuordnung zu verschiedenen zu überwachenden Objekten sind Messstationen 12, 12' und 12" vorgesehen. So überwacht die Messstation 12 beispielsweise den Vibrationszustand im Bereich eines Wohngebäudes 38. Die Messstation 12' überwacht den Vibrationszustand im Bereich einer Brücke 40, und die Messstation 12" überwacht den Vibrationszustand im Bereich eines Industriegebäudes 42. Wie vorangehend dargelegt, können in den Auswerteeinheiten 22 dieser verschiedenen Messstationen 12, 12' und 12" diese verschiedenen Messorte bzw. die verschiedenen zu überwachenden Objekte identifizierende Informationen mit den zugeordneten Schwellenwerten hinterlegt bzw. für die Auswertung der Sensorsignale verwendet werden.

Die Messstation 12 generiert aufgrund des darin erzeugten Auswertesignals ein Funk-Ausgangssignal, welches von beiden Verdichtern 14, 14' empfangen werden kann, da diese im Sendebereich der Messstation 12 positioniert sind und auch nicht durch andere Objekte abgeschirmt sind.

Beide Verdichter 14, 14' können jedoch die Funk-Ausgangssignale der Messstationen 12' und 12" nicht direkt empfangen. Der Verdichter 14 ist von beiden Messstationen 12' und 12" zu weit entfernt, um deren Funk-Ausgangssignale empfangen zu können. Der Verdichter 14' befindet sich momentan unter der Brücke 40 und ist durch die Brücke 40 von beiden Messstationen 12' und 12" abgeschirmt. Um gleichwohl zu gewährleisten, dass die beiden Verdichter 14, 14' bei ihrem Betrieb auch die an der Brücke 40 bzw. dem Industriegebäude 42 vorhandenen Vibrationszustände berücksichtigen können, ist gemäß einem weiteren Aspekt der vorliegenden Erfindung vorgesehen, dass die verschiedenen Messstationen 12, 12' und 12" ein vermaschtes Netzwerk, ein so genanntes Ad-hoc-Netzwerk, aufbauen. In einem derartigen Ad-Hoc-Netzwerk wird es möglich, die verschiedenen Messstationen 12, 12' und 12" nicht nur zur Erzeugung von Funk-Ausgangssignalen auf Grundlage der darin jeweils generierten Sensorsignale zu nutzen, sondern diese bzw. zumindest einige davon auch als Router bzw. Netzwerkknoten zu nutzen. Durch die für derartige Ad-Hoc-Netzwerke genutzten Routingverfahren wird es möglich, auch angepasst an sich ändernde Betriebssituationen Kommunikationswege zwischen den einzelnen Messstationen 12, 12' und 12" und den Empfangsstationen 16, 16' an den beiden Verdichtern 14, 14' zu erzeugen. Auf diese Art und Weise kann nicht nur die gesamte Reichweite des Netzwerkes erhöht werden, sondern es kann auch sichergestellt werden, dass die verschiedenen vibrationsemittierenden Maschinen, hier die beiden Verdichter 14, 14', im Wesentlichen auch unabhängig von ihrer momentanen Positionierung in dem hinsichtlich des Vibrationszustands zu überwachenden Areal erreichbar sind. Auch wird es damit möglich, Messstationen an Orten aufzustellen, die ansonsten, beispielsweise aufgrund der Topologie oder der Größe des zu überwachenden Areals funktechnisch nur schwer bzw. nicht erreichbar wären.

Bei einem derartigen System könnten grundsätzlich alternativ oder zusätzlich auch die an den Verdichtern 14 oder/und 14' vorgesehenen Empfangsstationen 16, 16', welche, wie bereits erwähnt, gleichermaßen beispielsweise zur Parameterierung der Messstationen mit einer Funk-Sendeeinheit ausgestaltet sein können, in das Netzwerk miteinbezogen werden. Sie können somit als Übertragungsknoten dienen, die auf Grund der Bewegung mit den Verdichtern 14, 14' ihre Position ändern, so dass davon ausgegangen werden kann, dass sie nicht an einer Positionierung sind, die gegen eine Funkverbindung abgeschirmt ist. Weiter ist es möglich, in ein derartiges Netzwerk Funk-Empfangs/Sende-Einheiten zu integrieren, die beispielsweise ortsfest aufgestellt werden und selbst nicht die Funktionalität der Aufnahme und Generierung von den Vibrationszustand betreffender Information erfüllen sollen. Sie dienen lediglich als Routingeinheiten, die beispielsweise auch an Positionen vorgesehen werden können, die hinsichtlich der Ermittlung des Vibrationszustands ungeeignet sind, hinsichtlich der Funkkommunikation der verschiedenen Messstationen mit den Empfangsstationen jedoch besonders vorteilhaft sind.

Um dabei die Sicherheit gegen äußere Einflüsse zu erhöhen, kann selbstverständlich das mit den verschiedenen Messstationen 12, 12', 12" und den Empfangsstationen 16, 16' aufgebaute Netzwerk kodiert werden, so dass ein Eindringen in dieses Netzwerk von außen nicht ermöglicht wird, insbesondere andere Netzwerke ignoriert werden. Dies ermöglicht es, in ein- und demselben Areal verschiedene derartige Netzwerke zu betreiben, beispielsweise um damit verschiedene Arten von vibrationsemittierenden Maschinen unabhängig voneinander überwachen bzw. betreiben zu können.

Bei der Definition des Routingverfahrens bzw. der Routingfunktionalität verschiedener Messstationen kann beispielsweise auch das bei diesen einzelnen Messstationen jeweils vorhandene Energieangebot berücksichtigt werden, da die Routingfunktionalität in den Messstationen selbstverständlich auch zu erhöhtem Energieverbrauch führt. So kann beispielsweise eine Messstation, bei welcher grundsätzlich nur ein geringeres Energieangebot zur Verfügung steht bzw. der Ladezustand eines Akkumulators schon stark abgenommen hat, aus der Routingfunktionalität herausgenommen werden, so dass andere Übertragungswege genutzt werden können, um in einer derartigen hinsichtlich der Energiesitation möglicherweise kritischen Messstation den Energiebedarf so weit als möglich reduzieren bzw. von vorne herein gering halten zu können. Grundsätzlich führt der Einsatz eines derartigen Netzwerkes bereits zu einem geringeren Energieverbrauch, da die Sendeleistung jeder einzelnen Messstation insofern verringert werden kann, als lediglich gewährleistet werden muss, dass ein Funkempfang in jedem Bereich des zu überwachenden Areals, in welchem eine Empfangsstation sich aufhalten kann, gewährleistet werden muss, jedoch nur über die jeweils nächstliegende Messstation und nicht die ggf. auch am weitesten entfernt liegende Messstation.

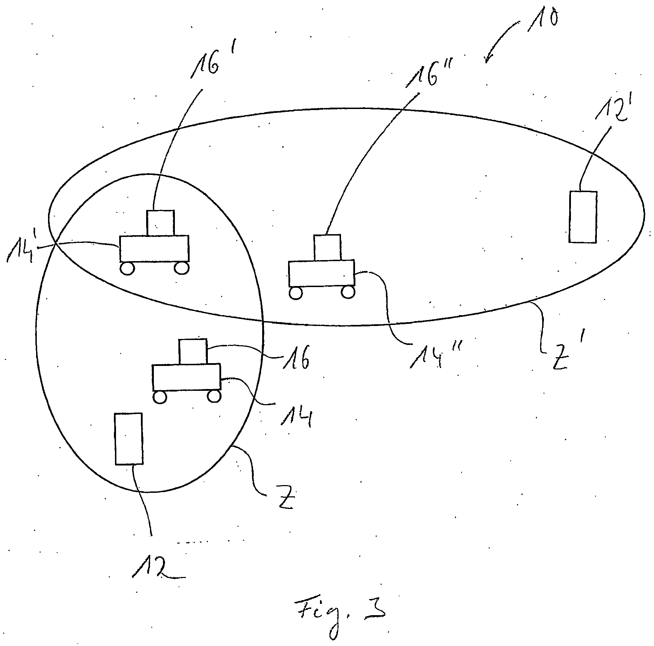

Ein weiterer Aspekt der vorliegenden Erfindung wird nachfolgend mit Bezug auf die Fig. 3 dargestellt. Die Fig. 3 zeigt ein System 10 mit zwei Messstationen 12, 12'. In dem durch diese Messstationen 12, 12' hinsichtlich des Vibrationszustands zu überwachenden Areal befinden sich drei vibrationsemittierende Maschinen, beispielsweise Verdichter 14, 14' und 14", jeweils mit einer Empfangsstation 16, 16' und 16".

In der vorangehend erläuterten Art und Weise können alle Verdichter 14, 14' und 14" bzw. die daran vorgesehenen Messstationen 16, 16' und 16" mit dem mit den beiden Messstationen 12, 12' aufgebauten Netzwerk kommunizieren, so dass in allen vibrationsemittierenden Maschinen die von den Messstationen 12, 12' bereitgestellten Informationen nutzbar sind.

Erfindungsgemäß werden in Zuordnung zu den beiden Messstationen 12, 12' Messzonen Z, Z' definiert. Bei der Definition einer derartigen Messzone Z, Z' kann beispielsweise nach vorheriger Analyse des Untergrunds das Vibrationsausbreitungs- bzw. Vibrationsdämpfungsverhalten berücksichtigt werden, so dass unter Berücksichtigung des Aufbaus des Untergrunds bzw. auch unter Berücksichtigung der im Bereich einer jeweiligen Messstation 12 bzw. 12' möglicherweise vorhandenen Gebäude sich die in räumlicher Hinsicht möglicherweise anisotropen Messzonen Z bzw. Z' ergeben können.

Auch die für die Schwingungsemission verantwortlichen Maschinen bzw. deren Emissionsverhalten kann grundsätzlich bei der Definition einer derartigen Messzone Z, Z' berücksichtigt werden.

Die in einer jeweiligen Messstation 12 bzw. 12' hinterlegte Information kann diese jeweilige Messstation selbst und die zugeordnete Messzone identifizieren. Dabei kann die Messzone beispielsweise durch Zuordnung eines bestimmten Kürzels alternativ aber auch durch Definition von deren Raumdaten identifiziert werden.

Die Funk-Ausgangssignale, welche von derartigen Messstationen 12, 12' abgegeben werden, enthalten dann neben der den jeweiligen Vibrationszustand an sich identifizierenden Information auch Information über die sendende Messstation 12 oder 12' oder/und ggf. genauere Information über die Definition einer Messzone. Diese Information, welche die Ausdehnung einer Messzone identifiziert, könnte grundsätzlich aber auch in einer jeweiligen Empfangseinheit 16, 16' oder 16" hinterlegt sein, so dass diese mit dem Funk-Ausgangssignal Information über die sendende Messstation 12 oder 12' empfängt und dann der jeweils sendenden Messstation Information über die jeweilige Messzone Z bzw. Z' zuordnet. In einer jeweiligen Empfangsstation 16, 16' bzw. 16" kann dann entschieden werden, ob der in einer jeweiligen Messstation 12 bzw. 12' identifizierte Vibrationszustand für die momentane Positionierung des Verdichters 14, 14' oder 14" relevant ist oder nicht. Beispielsweise befindet sich der Verdichter 14 in der um die Messstation 12 definierten Messzone Z, nicht jedoch in der Messzone Z' der Messstation 12'. Dies bedeutet, dass in der Empfangsstation 16, welche die Funk-Ausgangssignale beider Messstationen 12, 12' empfängt, nur dasjenige FunkAusgangssignal zur weiteren Verarbeitung bzw. Anzeige oder dergleichen genutzt wird, das von derjenigen Messstation 12 bzw. 12' ausgegeben wird, in deren Relevanzbereich, also Messzone, der Verdichter 14 sich befindet, hier also Messzone Z und somit Messstation 12. Bei der Anzeige des Vibrationszustands kann das Funk-Ausgangsssignal der Messstation 12' ignoriert werden. Gleichermaßen kann bei dem Verdichter 14" das Funk-Ausgangssignal der Messstation 12 ignoriert werden, da er sich nicht in der Messzone Z befindet. Der Verdichter 14' befindet sich im Überlappungsbereich der beiden Messzonen Z und Z', so dass in der Empfangseinheit 16' beide Funk-Ausgangssignale der Messstationen 12, 12' genutzt werden können, da die vom Verdichter 14' generierten Vibrationen für beide Messzonen von Relevanz sein können. Es können dann beispielsweise die in den beiden Funk-Ausgangssignalen enthaltenen Informationen angezeigt werden.

Um diese Vorgehensweise zu ermöglichen, ist es nicht nur erforderlich, in Zuordnung zu den Messstationen 12, 12' die räumlich ausgedehnten Messzonen Z, Z' zu definieren und die entsprechende Information in den Messstationen 12, 12' oder/und den Empfangsstationen 16, 16', 16" bereitzuhalten. Vielmehr ist es auch erforderlich, Information über die momentane Positionierung der Verdichter 14, 14' bzw. 14", also der vibrationsemittierenden Maschinen, in Bezug auf diese Messzonen Z, Z' zu erlangen. Dies kann beispielsweise durch Berücksichtigung der allgemein verfügbaren GPS-Information in den verschiedenen vibrationsemittierenden Maschinen erfolgen. Grundsätzlich kann hier vorgesehen sein, dass die Zuordnung einer oder mehrerer Messstationen 12 bzw. 12' zu Messzonen Z bzw. Z' als Information in den jeweiligen Messstationen 12 bzw. 12' bereit gehalten wird und beispielsweise in Verbindung mit der den Vibrationszustand repräsentierenden Information per Funk übertragen wird. In den Empfangsstationen 16, 16' bzw. 16" liegt hier beispielsweise über GPS erlangte Information über die momentane Positionierung eines jeweiligen Verdichters bzw. der darin vorgesehenen Empfangsstation 16, 16' bzw. 16" vor. In der Empfangseinheit selbst kann dann durch Vergleich mit den per Funk übertragenen Angaben verglichen werden, in welchem Relevanzbereich, also welcher Messzone Z bzw. Z', ein jeweiliger Verdichter sich befindet, so dass gleichermaßen festgelegt werden kann, welche einen Vibrationszustand repräsentierende Information zu berücksichtigen ist. Die Information, welche die räumliche Ausdehnung der verschiedenen Messzonen Z, Z' betrifft und beispielsweise in den diesen jeweils zugeordneten Messstationen 12 bzw. 12' zur Übermittlung mit der den Vibrationszustand betreffenden Information bereitgehalten wird, kann gleichermaßen in einem GPS-Format erfolgen, was insbesondere den Vergleich mit der die Positionierung eines jeweiligen Verdichters 14, 14', 14" betreffenden Information in einer Empfangsstation 16, 16', 16" vereinfachen kann.

Es ist selbstverständlich, dass in Zuordnung zu einzelnen Messstationen bzw. zu überwachenden Objekten mehrere Messzonen definiert werden können, die jeweils für verschiedenen vibrationserzeugende Ereignisse definiert sein können. So kann beispielsweise in Zuordnung zu ein- und demselben zu überwachenden Objekt, also beispielsweise Gebäude, eine bei der Überwachung der Vibrationen von einem Verdichter zu berücksichtigende Messzone definiert werden und eine bei der Überwachung der durch ein Rammgerät generierten Vibrationen zu berücksichtigende Messzone definiert werden. Es kann also bei der Definition derartiger Messzonen die Gefährdungswirkung der verschiedenen vibrationserzeugenden Maschinen, wozu im Sinne der vorliegenden Erfindung auch Sprengungen zu rechnen sind, berücksichtigt werden.

Es sei abschließend darauf hingewiesen, dass das vorangehend erläuterte System hinsichtlich verschiedenster Aspekte in seiner Ausgestaltung variiert werden kann. So ist es beispielsweise möglich, die Empfangseinheiten so zu gestalten, dass sie eine Anzeige oder eine Wiedergabe generell nur dann generieren, wenn ein kritischer Zustand vorliegt und mithin eine Änderung im Betriebszustand einer vibrationsemittierenden Maschine erforderlich ist. Durch einen unkritischen Zustand kann eine Anzeige unterbleiben. Grundsätzlich ist es auch möglich, parallel zu den hinsichtlich ihres Informationsgehalts deutlich reduzierten Funk-Ausgangssignalen auch Signale zu senden, in welchen die Sensorsignale der verschiedenen Sensoren übertragen werden, was beispielsweise dann möglich ist, wenn aufgrund der räumlichen Positionierung einer Empfangsstation der direkte oder unter Ausnutzung einer Routingfunktionalität erfolgende Empfang von höherfrequenten Signalen möglich ist. Weiterhin ist es selbstverständlich auch möglich, die Empfangsstation so zu gestalten, dass sie über die Funkverbindung mit den Messstationen dazu genutzt werden kann, diese durch Eingabe entsprechender Informationen zu konfigurieren, also die verschiedenen vorangehend angegebenen für die Auswertung relevanten bzw. erforderlichen Informationen in diese eingeben zu können. Die Empfangsstation kann grundsätzlich auch zur Archivierung der von den verschiedenen Messstationen übertragenden Informationen und ggf. auch von Informationen genutzt werden, welche in zeitlicher Zuordnung zu den von den Messstationen übertragenen Informationen den Betriebszustand einer jeweiligen vibrationsemittierenden Maschine, also beispielsweise deren Rüttelbetrieb, identifizieren. In Verbindung mit diesen Informationen bzw. Daten, welche im Wesentlichen den Betrieb einer vibrationsemittierenden Maschine und die an den Messstationen aufgenommene Auswirkung dieses Betriebs widerspiegeln, können ferner Daten gespeichert werden, welche einerseits die Positionierung der vibrationsemittierenden Maschine bezeichnen und welche weiterhin eine oder ggf. mehrere der vorangehend erläuterten Messzonen bezeichnen können. Diese räumlichen Koordinaten bzw. Bereiche betreffenden Informationen können beispielsweise über GPS gewonnen bzw. als GPS-Daten bereitgestellt und abgespeichert werden. Durch diese Gesamtheit an gespeicherten Informationen wird es möglich, zu einem späteren Zeitpunkt den Betrieb einer vibrationsemittierenden und dessen Auswirkungen beispielsweise auf Gebäude oder dergleichen nachzuvollziehen bzw. wieder zur Anzeige zu bringen. In Zuordnung dazu kann es beispielsweise auch vorteilhaft sein, die räumliche Ausdehnung einer Baustelle als Hintergrundinformation abzuspeichern bzw. bereitzuhalten, um die verschiedenen vorangehend angegebenen gespeicherten Daten in Verbindung mit den die räumliche Ausdehnung einer Baustelle betreffenden Informationen wiedergeben zu können. Eine derartige Wiedergabe kann beispielsweise bereits auch während des Betriebs einer vibrationsemittierenden Maschine auf einem Monitor oder dergleichen erfolgen, um eine Bedienperson in die Lage zu versetzen, zurückzuverfolgen, wie bzw. wo in der Vergangenheit eine vibrationsemittierende Maschine im Bereich einer Baustelle gearbeitet hat. Zur Archivierung derartiger Daten ist es weiterhin möglich, die Empfangseinheiten mit einer beispielsweise maschinenlesbaren Schnittstelle zu versehen, um diese zu archivierenden Daten an eine übergeordnete Archivierungeinheit übertragen zu können. Diese begrenzt das in den Empfangseinheiten selbst für derartige Daten erforderliche Speichervolumen.

## Patentansprüche

1. System zur Bereitstellung von einen Vibrationszustand repräsentierender Information für den Betrieb vibrationsemittierender Maschinen, insbesondere Baumaschinen, umfassend:
- wenigstens eine Messstation (12, 12', 12") mit wenigstens einem Sensor (20) zur Erfassung wenigstens einer im Zusammenhang mit dem Vibrationszustand stehenden Größe und mit einer Funk-Sendeeinheit (24) zur Abgabe eines mit der Größe in Zusammenhang stehenden Funk-Ausgangssignals,
- wenigstens eine Empfangsstation (16, 16', 16") zur Aufnahme des Funk-Ausgangssignals der wenigstens einen Messstation (12, 12', 12"),
**dadurch gekennzeichnet, dass** die wenigstens eine Messstation (12, 12', 12") eine ein Sensorsignal von dem wenigstens einen Sensor (20) aufnehmende Auswerteeinheit (22) zur Bereitstellung eines den Vibrationszustand repräsentierenden Auswertesignals auf der Grundlage des Sensorsignals umfasst, wobei die Funk-Sendeeinheit (24) das Funk-Ausgangssignal auf der Grundlage des Auswertesignals erzeugt.

2. System nach Anspruch 1,
**dadurch gekennzeichnet, dass** die wenigstens eine Empfangsstation (16, 16', 16") umfasst:
- eine Funk-Empfangseinheit (28) zur Aufnahme des Funk-Ausgangssignals von wenigstens einer Messstation (12, 12', 12"),
- eine Signalverarbeitungseinheit (30, 32, 34) zur Erzeugung von Vibrationsanzeigeinformation für eine optische oder/und akustische Vibrationszustandswiedergabeeinheit (32) oder/und zur Erzeugung von Vibrationszustandsreaktionsansteuerinformation zur Ansteuerung einer vibrationsemittierenden Maschine (14, 14', 14").

3. System nach Anspruch 1 oder 2,
**dadurch gekennzeichnet, dass** wenigstens ein Sensor (20) ein Beschleunigungssensor ist oder/und dass wenigstens ein Sensor (20) ein Geschwindigkeitssensor ist.

4. System nach einem der Ansprüche 1 bis 3,
**dadurch gekennzeichnet, dass** die Auswerteeinheit (22) dazu ausgebildet ist, das Auswertesignal auf der Grundlage folgender Information zu erzeugen:
- einer einen Messort oder/und eine Messzone (Z, Z') um den Messort repräsentierenden Ortsinformation, oder/und
- einer Vibrationsschwellenwertinformation, oder/und
- einer die Art der Vibration repräsentierenden Vibrationsartinformation, vorzugsweise in Verbindung mit einer Vibrationsartschwellenwertinformation, oder/und
- einer Messzeitinformation, vorzugsweise in Verbindung mit einer Messzeitschwellenwertinformation.

5. System nach Anspruch 4,
**dadurch gekennzeichnet, dass** die Auswerteeinheit (22) wenigstens eine Schnittstelle zur Eingabe wenigstens einer in Verbindung mit dem Sensorsignal der Erzeugung des Auswertesignals zu Grunde zu legenden Information oder/und von Konfigurationsformation zugeordnet ist.

6. System nach einem der Ansprüche 1 bis 5,
**dadurch gekennzeichnet, dass** der Auswerteeinheit (22) eine Speichereinheit zugeordnet ist zur Speicherung des Sensorsignals von wenigstens einem Sensor öder/und des Auswertesignals, vorzugsweise zur späteren Erzeugung des Funk-Ausgangssignals.

7. System nach einem der Ansprüche 1 bis 6,
**dadurch gekennzeichnet, dass** das von wenigstens einer Messstation (12, 12', 12") ausgegebene Funk-Ausgangssignal die Messstation (12, 12', 12") identifizierende Identifikationsiformation enthält.

8. System nach Anspruch 7,
**dadurch gekennzeichnet, dass** die Identifikationsinformation Information über den Messort oder/und eine Messzone (Z, Z') um den Messort der Messstation (12, 12', 12") enthält.

9. System nach einem der Ansprüche 1 bis 8,
**dadurch gekennzeichnet, dass** eine Mehrzahl von Messstationen (12, 12', 12") oder/und Empfangsstationen (16, 16') vorgesehen ist, wobei wenigstens eine Messstation (12, 12', 12") oder/und Empfangsstation (16, 16') eine Funk-Empfangseinheit (26) zur Aufnahme des Funk-Ausgangssignals von wenigstens einer anderen der Messstationen (12, 12', 12") aufweist, wobei die Funk-Sendeeinheit (24) der wenigstens einen Messstation (12, 12', 12") oder/und eine Funk-Sendeeinheit wenigstens einer Empfangsstation (16, 16') dazu ausgebildet ist, auf der Grundlage eines von einer anderen Messstation (12, 12', 12") oder/und Empfangsstation (16, 16') empfangenen Funk-Ausgangssignals ein Funk-Ausgangssignal zu erzeugen.

10. System nach Anspruch 9,
**dadurch gekennzeichnet, dass** das von der Funk-Sendeeinheit (26) der wenigstens einen Messstation (12, 12', 12") oder einer Empfangsstation (16, 16') erzeugte Funk-Ausgangssignal dem von einer anderen Messstation (12, 12', 12") oder Empfangsstation (16, 16') empfangenen Funk-Ausgangssignal entspricht.

11. System nach Anspruch 9 oder 10,
**dadurch gekennzeichnet, dass** eine Mehrzahl von Messstationen (12, 12', 12") oder/und Empfangsstationen (16, 16') ein vermaschtes Netzwerk zur Informationsübertragung zu wenigstens einer Empfangsstation (16, 16', 16") bildet.

12. Verfahren zum Betreiben einer Maschine, insbesondere Baumaschine, auf der Grundlage von einen Vibrationszustand repräsentierender Information, unter Verwendung eines Systems (10) nach einem der vorangehenden Ansprüche, wobei das Verfahren die Maßnahmen umfasst:
- in Zuordnung zu wenigstens einer Messstation (12, 12'), Definieren einer Messzone (Z, Z'),
- Erzeugen von einen Vibrationszustand in der Messzone (Z, Z') repräsentierender Information vermittels der wenigstens einen Messstation (12, 12'),
- Berücksichtigen der den Vibrationszustand repräsentierenden Information für den Betrieb der Maschine (14, 14', 14") nur dann, wenn diese Maschine (14, 14', 14") sich in der Messzone (Z, Z') befindet oder sich in die Messzone (Z, Z') bewegt.

13. Verfahren nach Anspruch 12,
**dadurch gekennzeichnet, dass** die Messzone (Z, Z') definiert wird auf Grundlage der:
- Beschaffenheit des Untergrunds im Bereich der Messzone (Z, Z'), oder/und
- Art des Messortes, oder/und
- Art der Vibrationen.

## Claims

1. System for providing information representing a vibrational state for the operation of vibration emitting machines, in particular construction machines, comprising:
- at least one measuring station (12, 12', 12") with at least one sensor (20) for detecting at least one parameter in relation to the vibrational state and with a radio transmitter unit (24) for emitting a radio output signal in relation to the parameter,
- at least one receiver station (16, 16', 16") for receiving the radio output signal of the at least one measuring station (12, 12', 12"),
**characterized by** the at least one measuring station (12, 12', 12") comprising an evaluation unit (22) receiving a sensor signal from the at least one sensor (20) for providing an evaluation signal representing the vibration condition on the basis of the sensor signal, said radio transmitter unit (24) generating the radio output signal on the basis of the evaluation signal.

2. System according to claim 1,
**characterized by** the at least one receiver station (16, 16', 16") comprising:
- a radio receiver unit (28) for receiving the radio output signal from at least one measuring station (12, 12', 12"),
- a signal processing unit (30, 32, 34) for generating vibration indication information for an optical or/and acoustic vibration condition reproduction unit (32) or/and for generating vibration condition reaction control information for controlling a vibration emitting machine (14, 14', 14").

3. System according to claim 1 or 2,
**characterized by** at least one sensor (20) being an acceleration sensor or/and by at least one sensor (20) being a speed sensor.

4. System according to one of claims 1 to 3,
**characterized by** said evaluation unit (22) being adapted for generating the evaluation signal on the basis of the following information:
- a location information representing a measurement location or/and a measurement zone (Z, Z') around the measurement location, or/and
- a vibration threshold information, or/and
- a vibration type information representing the type of vibration, preferably in conjunction with a vibration threshold information, or/and
- a measurement time information, preferably in conjunction with a measurement time threshold information.

5. System according to claim 4,
**characterized by** at least one interface for the input of at least one piece of information as a basis for generating the evaluation signal in conjunction with the sensor signal being associated to the evaluation unit (22).

6. System according to one of claims 1 to 5,
**characterized by** a storage unit being associated to the evaluation unit (22) for storing said sensor signal of at least one sensor or/and the evaluation signal, preferably for a following generation of the radio output signal.

7. System according to one of claims 1 to 6,
**characterized by** the radio output signal emitted from at least one measuring station (12, 12', 12") containing an identification information identifying the measuring station (12, 12', 12").

8. System according to claim 7,
**characterized by** the identification information containing information concerning the measurement location or/and a measurement zone (Z, Z') around the measurement location of the measuring station (12, 12', 12").

9. System according to one of claims 1 to 8,
**characterized by** a plurality of measuring stations (12, 12', 12") or/and receiver stations (16, 16') being provided wherein at least one measuring station (12, 12', 12") or/and receiver station (16, 16') comprises a radio receiver unit (26) for receiving the radio output signal from at least one more other measuring station (12, 12', 12"), said radio transmitter unit (24) of the at least one measuring station (12, 12', 12") or/and a radio transmitter unit of at least one receiving unit (16, 16') being adapted for generating a radio output signal on the basis of a radio output signal received from another measuring station (12, 12', 12") or/and receiver station (16, 16').

10. System according to claim 9,
**characterized in that** the radio output signal generated by the radio receiver unit (26) of the at least one measuring station (12, 12', 12") or a receiver station (16, 16') corresponds to the radio output signal received by another measuring station (12, 12', 12") or a receiver station (16, 16').

11. System according to claim 9 or 10,
**characterized by** a plurality of measuring stations (12, 12', 12") or/and receiver stations (16, 16') forming a meshed network for transmitting information to at least one receiver station (16, 16', 16").

12. Method for operating a machine, in particular a construction machine, on the basis of information representing a vibration condition using a system (10) according to one of the preceding claims, the procedure comprising the following measures:
- defining a measurement zone (Z, Z') in association to at least one measuring station (12, 12'),
- generating an information representing a vibration condition in the measurement zone (Z, Z') by means of the at least one measuring station (12, 12'),
- taking into account the information representing the vibration condition for the operation of the machine (14, 14', 14") only when said machine (14, 14', 14") is in the measurement zone (Z, Z') or moves inside the measurement zone (Z, Z').

13. Method according to claim 12,
**characterized by** said measurement zone (Z, Z') being defined on the basis of:
- the conditions of the ground in the region of the measurement zone (Z, Z'), or/and
- the nature of the measurement location, or/and
- the type of vibrations.

## Revendications

1. Système pour prévoir des informations représentant un état vibratoire pour le fonctionnement de machines émettant des vibrations, en particulier de machines de chantier, comprenant :
- au moins une station de mesure (12, 12', 12") avec au moins un capteur (20) pour détecter au moins un paramètre associé à l'état vibratoire, et avec une unité d'émetteur radio (24) pour émettre un signal radio sortant associé au paramètre,
- au moins une station de réception (16, 16', 16") pour recevoir le signal radio sortant de ladite au moins une station de mesure (12, 12', 12"),
**caractérisé par** ladite au moins une station de mesure (12, 12', 12") comprenant une unité d'évaluation (22) recevant un signal de capteur dudit au moins un capteur (20) pour prévoir un signal d'évaluation représentant l'état vibratoire sur la base du signal de capteur, l'unité d'émetteur radio (24) produisant le signal radio sortant sur la base du signal d'évaluation.

2. Système selon la revendication 1,
**caractérisé par** ladite au moins une station de réception (16, 16', 16") comprenant :
- une unité radio de réception (28) pour recevoir le signal radio sortant d'au moins une station de mesure (12, 12', 12"),
- une unité de traitement de signal (30, 32, 34) pour produire des informations indiquant des vibrations pour une unité de reproduction d'état vibratoire (32) optique ou/et acoustique ou/et pour produire des informations de commande de réaction d'état vibratoire pour commander une machine émettant des vibrations (14, 14', 14").

3. Système selon la revendication 1 ou 2,
**caractérisé par** au moins un capteur (20) étant un capteur d'accélération ou/et par au moins un capteur (20) étant un capteur de vitesse.

4. Système selon une des revendications 1 à 3,
**caractérisé par** l'unité d'évaluation (22) étant adaptée pour produire le signal d'évaluation sur la base des informations suivantes :
- une information de localisation représentant un lieu de mesure ou/et une zone de mesure (Z, Z') autour du lieu de mesure, ou/et
- une information de valeur de seuil de vibration, ou/et
- une information de vibration représentant le type de vibration, de préférence en association avec une information de valeur de seuil de vibration, ou/et
- une information de temps de mesure, de préférence en association avec une information de valeur de seuil de vibration.

5. Système selon la revendication 4,
**caractérisé par** une interface étant associée à l'unité d'évaluation (22) pour saisir au moins une information à prendre en référence pour la production du signal d'évaluation en association avec le signal du capteur.

6. Système selon une des revendications 1 à 5,
**caractérisé par** une unité de mémorisation étant associée à l'unité d'évaluation (22) pour mémoriser le signal de capteur d'au moins un capteur ou/et le signal d'évaluation, de préférence pour produire plus tard le signal radio sortant.

7. Système selon une des revendications 1 à 6,
**caractérisé par** le signal radio sortant émis par au moins une station de mesure (12, 12', 12") contenant des informations d'identification identifiant la station de mesure (12, 12', 12").

8. Système selon la revendication 7,
**caractérisé par** l'information d'identification contenant des informations sur le lieu de mesure ou/et une zone de mesure (Z, Z') autour du lieu de mesure de la station de mesure (12, 12', 12").

9. Système selon une des revendications 1 à 8,
**caractérisé par** une pluralité de stations de mesure (12, 12', 12") ou/et de stations de réception (16, 16') étant prévues, au moins une station de mesure (12, 12', 12") ou/et une station de réception (16, 16') comprenant une unité de réception radio (26) pour recevoir le signal radio sortant d'au moins une autre des stations de mesure (12, 12', 12"), l'unité d'émetteur radio (24) de ladite au moins une station de mesure (12, 12', 12") ou/et une unité d'émetteur radio (24) d'au moins une station de réception (16, 16') étant adaptée pour produire un signal radio sortant sur la base d'un signal radio sortant reçu d'une autre station de mesure (12, 12', 12") ou/et station de réception (16, 16').

10. Système selon la revendication 9,
**caractérisé par** le signal radio sortant produit par l'unité de réception radio (26) de ladite au moins une station de mesure (12, 12', 12") ou d'une station de réception (16, 16') correspondant à celui reçu par une autre station de mesure (12, 12', 12") ou station de réception (16, 16').

11. Système selon la revendication 9 ou 10,
**caractérisé par** une pluralité de stations de mesure (12, 12', 12") ou/et de stations de réception (16, 16') formant un réseau maillé pour la transmission d'informations envers au moins une station de réception (16, 16', 16").

12. Méthode pour opérer une machine, en particulier une machine de chantier, sur la base d'informations représentant un état vibratoire, utilisant un système (10) selon une des revendications précédentes, la méthode comprenant les mesures suivantes :
- définir une zone de mesure (Z, Z') en association à au moins une station de mesure (12, 12'),
- produire des informations représentant un état vibratoire dans la zone de mesure (Z, Z') au moyen de ladite au moins une station de mesure (12, 12'),
- tenir compte des informations représentant l'état vibratoire pour le fonctionnement de la machine (14, 14', 14") seulement quand cette machine (14, 14', 14") se trouve dans la zone de mesure (Z, Z') ou bouge dans la zone de mesure (Z, Z').

13. Méthode selon la revendication 12,
**caractérisée par** la zone de mesure (Z, Z') étant définie sur la base :
- des conditions du sous-sol dans la région de la zone de mesure (Z, Z') ou/et
- du type du lieu de mesure, ou/et
- du type des vibrations.
